## Europäisches Patentamt
## European Patent Office
## Office européen des brevets

(11) Publication number:

# 0 379 357
## A2

(12) # EUROPEAN PATENT APPLICATION

(21) Application number: 90300490.1

(22) Date of filing: 17.01.90

(51) Int. Cl.5: H02J 7/14

(30) Priority: 18.01.89 JP 9279/89

(43) Date of publication of application:
25.07.90 Bulletin 90/30

(84) Designated Contracting States:
DE FR GB

(71) Applicant: HITACHI, LTD.
6, Kanda Surugadai 4-chome
Chiyoda-ku, Tokyo 100(JP)

(72) Inventor: Mori, Yuuichi
467 Ooaza Tahiko Katsuta-shi
Ibaraki-prefecture(JP)
Inventor: Mashino, Keiichi
2-2-5 Ushirono Katsuta-shi
Ibaraki-prefecture(JP)
Inventor: Saitou, Akihiro
3600-27 Nakane Katsuta-shi
Ibaraki-prefecture(JP)

(74) Representative: Molyneaux, Martyn William et
al
c/o Ladas & Parry Isartorplatz 5
D-8000 Munich 2(DE)

(54) Power supply device for vehicle.

(57) A power supply device suitable for a vehicle, the device being capable of producing both alternating current power at a commercial frequency and direct current power for the vehicle charging system. The device has an alternating current genertor (11a-11c) driven by the vehicle engine and the generator is connected to a rectifier (12) for supplying direct current power to a direct current load (3) and to an alternating transformer (102), preferably of the insulated type, for boosting the alternating current voltage. The transformer (102) may be connected directly to an inverter (109) or to an inverter (105a-d) via a full wave rectifier (103), the inverter providing a high alternating voltage, eg 100V, at a predetermined commercial frequency, eg. 60Hz for an alternating current load (101).

Preferably a control circuit (106) is provided for controlling the engine idling speed via the throttle valve (21) so that, for example, the engine idling speed is increased only when the handbrake is determined to be applied ON and the gear transmission is in neutral.

The invention provides a stable alternating current power output having only a small alternating current output voltage variation even though the direct current load is varied.

Fig. 1

# POWER SUPPLY DEVICE FOR VEHICLE

## Background of Invention

### Field of Invention

This invention relates to a power supply device for supplying both alternating and direct current (A.C. and D.C.) power.

The present invention relates in particular to a power supply device for a vehicle providing general household use commercial frequency alternating current (A.C.) power for use, for example in a camping vehicle and direct current (D.C.) power for the vehicle battery charging circuit.

### Description of Related Art

A power supply device which produces a household commercial frequency alternating current power by using an automobile engine, is disclosed in Japanese Patent Laid-Open No. 63-77358 (1988), wherein armature coils of a generator are constituted by winding primary three phases and secondary three phases in series, one field coil is provided for a low voltage direct current load, for example, a battery of 12V and power obtained from the primary three phases is output for conventional battery charging use through intermediate tap terminals, and the power obtained at the secondary three phases is output for an alternating current power of 100V.

On the other hand, although not for a plural power supply device for obtaining a commerical frequency alternating power, a device, wherein a transformer is connected to output terminals of an alternating current generator, the obtained high voltage alternating current power is inverted into a high voltage direct current power which is output as a power for a high voltage direct current load, is disclosed in Japanese Patent Laid-Open No. 63-69500 (1988), equivalent to US-A-4780619.

Since the plural power supply device disclosed in Japanese Patent Laid-Open No. 63-77358 (1988) is constructed such that the primary three phases and the secondary three phases are wound in series and one field coil for 12V battery use is provided, there is a problem that the output voltage of the secondary three phase side greatly varied, since the amount of power generation of the secondary three phase side, which is 100V alternating current power use, was affected by the load capacity at the 12V side (the battery voltage). More specifically, in this conventional device, although the field current in the field coil flowed in response to the battery voltage in that the voltage at the intermediate tap terminals and the battery voltage was kept substantially constant, the amount of power generation of the secondary three phase side, which is a 100V alternating current power, changed and its output voltage greatly varied due to the output current change at the primary three phase side during that time. Accordingly, for dealing this problem, the capacity of the generator needed to be in excess of that stated. Additionally, the output speed of the engine must be kept constant to provide A.C. at a constant frequency and as a consequence it is not possible to increase the engine speed to provide increased A.C. power.

On the other hand, since the device disclosed in Japanese Patent Laid-Open No. 63-69500 (1988) obtained the high voltage alternating current by making use of a transformer, the variation of the high voltage side output voltage due to the influence of the load capacity at the 12V side is small. However, this conventional device is intended for obtaining a power for use with a high voltage direct current load and not for providing the plural power supply device generating a commercial frequency alternating current power. Further since this device employed a transformer of an autotransformer type wherein an intermediate tap type for reducing its size is used, there was a safety problem, because no insulation can be provided with regard to a vehicle body earthing potential.

The present invention seeks to provide a plural power supply device for a vehicle which has a small output voltage variation due to influence of a low voltage direct current load side and to supply a stable commercial frequency alternating current power.

Another object of the present invention is to provide a plural power supply device which supplies a commercial frequency alternating current power without safety problems.

## Summary of the Invention

According to this invention there is provided a power supply device for supplying both alternating current and direct current power including an alternating current generator having the output thereof connected to

    a) a rectifier for supplying direct current power to a load and

    b) an alternating tansformer for increasing the alternating current voltage from the alternating current generator, characterized by said alternating transformer being connected to provide said increased alternating current voltage to an inverter, whereby said inverter is arranged to provide a high alternating voltage output at a predetermined frequency for an alternating current load.

Preferably the output of the alternating transformer is connected to a rectifier for producing a high voltage direct current output, and the rectifier has the output thereof connected to said inverter. Advantageously the device is connected to an engine said engine being arranged to drive said alternating current generator, and wherein there is provided a control means arranged to control the idling speed of said engine at such a level that the alternating current load is satisfied. Conveniently the predetermined frequency is a commercial frequency.

Preferably the transformer has a primary and a secondary and said transformer is an insulated type in which the primary and secondary are insulated from one another.

In a feature of this invention there is provided a vehicle including the device in accordance with said invention.

Preferably said vehicle is provided with a handbrake and the control means is adapted to increase the engine idling speed only when said handbrake is applied (ON). Advantageously said vehicle is also provided with a gear transmission including a detector means for detecting the state of said transmission and said control means is adapted to increase the engine idling speed only when the handbrake is applied (ON) and the gear transmission detector means determines that the transmission is in a neutral (i.e. non drive) condition. Advantageously said control means is provided with a protection device adapted to receive signals from the gear transmission detector means and to return the engine speed to a low level speed if the transmission is detected to be in a gear drive condition.

Conveniently the direct current load includes a vehicle battery charging circuit and preferably the predetermined frequency is a commercial frequency.

In the present invention, since the commercial frequency alternating current (A.C.) power is obtained from the alternating current (A.C.) output of the alternating current generator through a transformer, even if the current flowing through the output terminals of the alternating current generator varies due to the influence of the low voltage direct current load, its output terminal voltage, due to, the primary voltage of the transformer being controlled is subtantially constant. Accordingly, the obtained commercial frequency alternating current power shows a substantially constant voltage characteristic, and a stable commercial alternating current power is obtained.

Further, since the control means for increasing the vehicle idling speed is effected only when the handbrake is pulled ON and the gear transmission is in a neutral state, a large power is supplied during only when the vehicle is at standstill. Still further, since the protection device returns the engine speed to a low level (idle speed) if the transmission is in a drive condition, double failsafe function is performed and safety is further enhanced.

Moreover, by employing an insulation type of transformer as the transformer, the likelihood of an electric shock is eliminated and a safe plural power supply device is provided.

Brief Description of the Drawings

Fig.1 is a circuit diagram of a power supply device in accordance with one embodiment of the present invention,

Fig.2(a) and Fig.2 (b) respectively show a relationship between the 100V system output current and output terminal voltage, and a relationship between the 12V system output direct current and output voltage, in the conventional device,

Fig.3 (a) and Fig.3 (b) respectively show a relationship between the secondary output current and the secondary output voltage of the transformer in the power supply device for a vehicle in accordance with this invention, and the output direct current and output voltage of the 12V D.C. system according to the present invention,

Fig.4 is a circuit diagram showing an internal constitution of a control circuit of the power supply device for a vehicle in accordance with an embodiment of the present invention,

Fig.5 is a circuit diagram showing an internal constitution of a DC-DC converter in the control circuit,

Fig.6 is a circuit diagram showing an internal constitution of an integrated circuit in a control circuit,

Fig.7 is a block diagram showing an internal constitution of a single chip microcomputer in the control circuit,

Fig.8 is a circuit diagram showing an internal constitution of an amplifier in the control circuit,

Fig.9 is a control flow diagram showing a start program in the control circuit,

Fig.10 - Fig.12 are respectively control flow diagrams showing interruption processing of timers 1-3 in the control flow of Fig.9,

Fig.13 is a control flow diagram showing a throttle valve adjustment auxiliary program in the control flow of Fig.9,

Fig.14 - Fig.16 are respectively control flow diagrams showing interruption processings at input ports P5-P7,

Fig. 17 is a timing chart showing interruption timing of timers 1-3,

Fig.18 is a circuit diagram showing a power supply device for a vehicle according to another embodiment of the present invention, and

Fig.19 is a diagram showing an input voltage waveform and an output voltage waveform of a thyrister rectifier group used in the power supply device for a vehicle of Fig.18.

In the Figures, like reference numerals denote like parts.

Description of the Preferred Embodiments

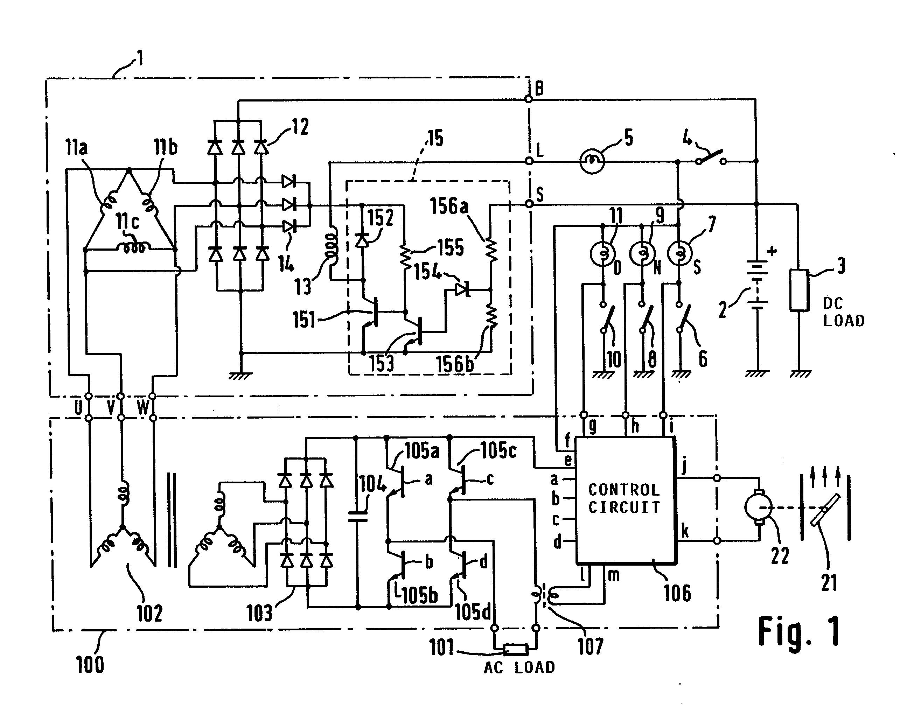

One embodiment of the present invention will now be explained with reference to Fig.1 - Fig.17. The embodiment is an example of a plural power supply device for an automobile having two power supply systems, of D.C. 12V and A.C. 100V.

The overall constitution of the present embodiment is explained with reference to Fig.1.

In Fig.1 an alternating current generator 1 is driven by an engine (not shown). The alternating current generator 1 is composed of three phase armature coils 11a, 11b and 11c connected in delta, a three phase fullwave rectifier 12 which converts the alternating current output of these armature coils into direct current, a field coil 13 which supplies flux to the armature coils 11a, 11b and 11c, and auxiliary rectifier 14 which supplies current to the field coil 13, and a voltage regulator 15 which controls the output voltage of the armature coils to a predetermined value by regulating the current flowing through the field coil 13.

The voltage regulator 15 is constituted by a power n-p-n transistor 151, a diode 152, a n-p-n transistor 153, a zener diode 154 and resistors 155, 156a and 156b.

A battery 2 is charged by the generator 1 as well as supplying current to a D.C. load 3. The numeral 4 designates a keyswitch and the numeral 5 designates a charge indicating lamp.

A switch 6 is rendered ON when a handbrake is ON and operates an alarm lamp 7. Similarly a switch 8 and an alarm lamp 9 are rendered ON when the gear box is in neutral, and a switch 10 and an alarm lamp 11 which are rendered ON when the transmission is in gear, ie. the vehicle is moving.

A contoller 100 receives the three phase alternating current output U, V and W phases of the generator 1 as its input and supplies an alternating current power of 100V to an A.C. load 101 having commercial frequency of 50 Hz or 60 Hz. The controller is composed of a transformer 102 of which a low voltage side (primary side) and a high voltage side (secondary side) are insulated from each other and are respectively connected in star, a three phase full wave rectifier 103 recitifies the three phase alternating current at the secondary (high voltage) side of the transformer, a condenser 104 is provided for smoothing the direct current output, n-p-n power transistors 105a, 105b, 105c and 105d which constitute an inverter circuit for inverting the direct current to an alternating current, a motor 22 which operates a fuel throttle valve 21 by driving an accelerator pedal (not shown), a control circuit 106 which controls operations of the transistors 105a-105c of the inverter circuit and the motor 22 and a current transformer 107 for detecting the alternating current output. The base electrodes of transistors 105a-105d are connected to an controlled by controller circuit 106.

The operation of the above circuit is outlined below. When the keyswitch 4 is closed, a current flows from the battery through the charge indicating lamp 5, the field coil 13 and the power transistor 151 and lights the charge indicating lamp 5. Thereafter, when the vehicle engine begins to rotate, the alternating current generator 1 produces an alternating current voltage at the armature coils 11a, 11b and 11c and an electric power is supplied to the battery 2 as well as the D.C. load 3 through the three phase full wave rectifier 12. On the other hand, since the voltage at the cathode terminal of the auxiliary rectifier 14 becomes high, and the charge indicating lamp 5 is turned off, a current is supplied to the field coil 13 so that self excitation begins.

When the revolution speed of the eingine increases, the output voltage of the alternating current generator 1 becomes high and the positive terminal voltage of the battery 2 also becomes high. When the terminal voltage of the battery 2 becomes high, a voltage at the dividing point between resistors 156a and 156b becomes high, and the zener diode 154 and the transistor 153 become conductive and the power transistor 151 conduction is interrupted. When the transistor 151 has been interrupted, the current flowing through the field coil is limited by the diode 152. When the field current decreases, the voltage generated at the armature coils 11a, 11b and 11c reduces and the voltage of the battery 2 decreases such that the zener diode 154 conduction is interrupted and then the transistor 153 conduction is interrupted. As a result, the power transistor 151 becomes conductive, the field current is energized and the output voltage increases. Through repetition of the above operation, the voltage of the battery 2 is controlled to be substantially constant.

In the controller 100, the output voltage of the alternating current generator 1 is boosted by the three phase transformer 102, the boosted high voltage alternating current output is rectified by the fullwave rectifier 103 and smoothed by the condenser 104 to form the high voltage direct current output, wherein since the output voltage (the voltage of the battery 2) of the alternating current generator 1 is controlled to be a substantially constant value by regulating the field current as explaimed above, the outpt voltage of the three phase transformer 102 is rendered substantially constant and the smoothed output voltage from the condenser 104 is also rendered a substantially constant direct current output value.

By driving the bases of the power transistors 105a, 105b, 105c and 105d with the control circuit 106, the direct current output is inverted into a rectangular wave alternating current having a predetermined frequency of 50 Hz or 60 Hz and is supplied to the A.C. load 101 as a commercial frequency alternating current power.

The output of the generator 1 during normal idling of the vehicle at low r.p.m. is sometimes insufficient depending upon the capacity of the A.C. load. For obtaining a necessary output in such cases, the control circuit 106 has the function of increasing the idling revolutions per minute, ie. engine speed, by driving the motor 22 and to increase the opening angle of the fuel throttle valve 21. Thereby the engine revolutions increase up to a revolution number where the necessary generator output is obtained, and a sufficient electric power corresponding to the capacity of the A.C. load is obtained even during idling operation. However this idling up function is dangerous when the same operates during running of the vehicle. Therefore the control circuit 106 renders the idling up function operable only when both the handbrake switch 6 and the neutral switch 8 are in an ON state. Further the control circuit 106 has the function to always release the operation of the idling up function when the running switch 10 is ON, whereby a double fail safe function is performed and high safety is ascertained.

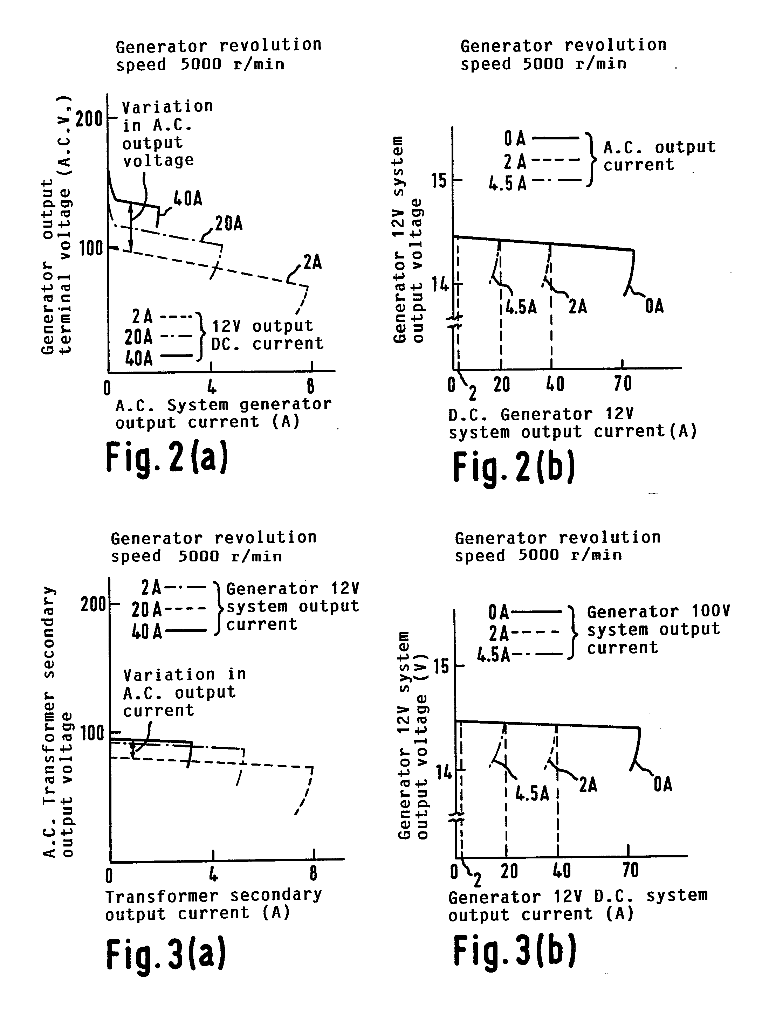

Now, an output voltage characteristic of the two system power source of 12V system and 100V system obtained by providing the intermediate taps at the armature coils disclosed in Japanese Patent Laid-Open No. 63-77358 (1988) and an output voltage characteristic of the two system power source produced by using the tansformer 102 of the present embodiment are explained with reference to Fig.2 and Fig.3.

Fig.2 (a) shows a relationship between output A.C. current (abscissa) of a 100V system (effective value of one phase current) and output terminal voltages (ordinate) of a 100V A.C. system (effective value of line voltage) through the intermediate tap of the device in Japanese Patent Laid-Open No. 63-77358 (1988) for different values of 12V system D.C. output current at a constant A.C. generator speed of 5000 r.p.m. Fig.2 (b) shows a relationship between output direct current (abscissa) of 12V system and output voltage (ordinate) for different values of A.C. output current with a constant A.C. generator output speed of 5000 r.p.m. Fig.3 (a) shows a relationship between the secondary output current (output current of 100V A.C. system) along the abscissa of the transformer 102 of the present embodiment and the secondary output voltage (output voltage of 100V A.C. system) along the ordinate for the same D.C. output current and generator speed as in Fig.2 (a), and Fig.3 (b) shows a relationship between the output direct current abscissa of the 12V system and the 12V D.C. output voltage for the same alternating currents and A.C. generator output as in Fig.2 (b).

In Japanese Patent Laid-Open No. 63-77358 (1988), the field current of the generator is controlled in response to the battery voltage ie. the intermediate tap terminal voltage, the output voltage of the 12V system is controlled at substantially constant voltage shown in Fig.2 (b) (although in the region beyond the generation capacity of the generator, the voltage shows an inwardly drooping characteristic), however the output voltage of 100V A.C. system varies greatly depending upon the change of the output current of the 12V D.C. system as shown in Fig.2 (a).

On the other hand, in the present embodiment the output voltage of the generator 1 is boosted by the transformer 102 to obtain the alternating current voltage of the 100V system, and the battery voltage is controlled at a constant value through an adjustment of the field current. Thus, the primary voltage of the transformer is controlled at a substantially constant value so that the output voltage of 100V A.C. system exhibits a substantially constant voltage characteristic as shown in Fig.3 (a) for different D.C. output currents.

It will therefore be understood that with the present embodiment, the commercial frequency alternating current power is obtained from the alternating current output of the alternating current generator 1 through the transformer 102, and the obtained commercial frequency alternating current electric power shows a substantially constant voltage characteristic and a stable commercial alternating current electric power is thus obtained.

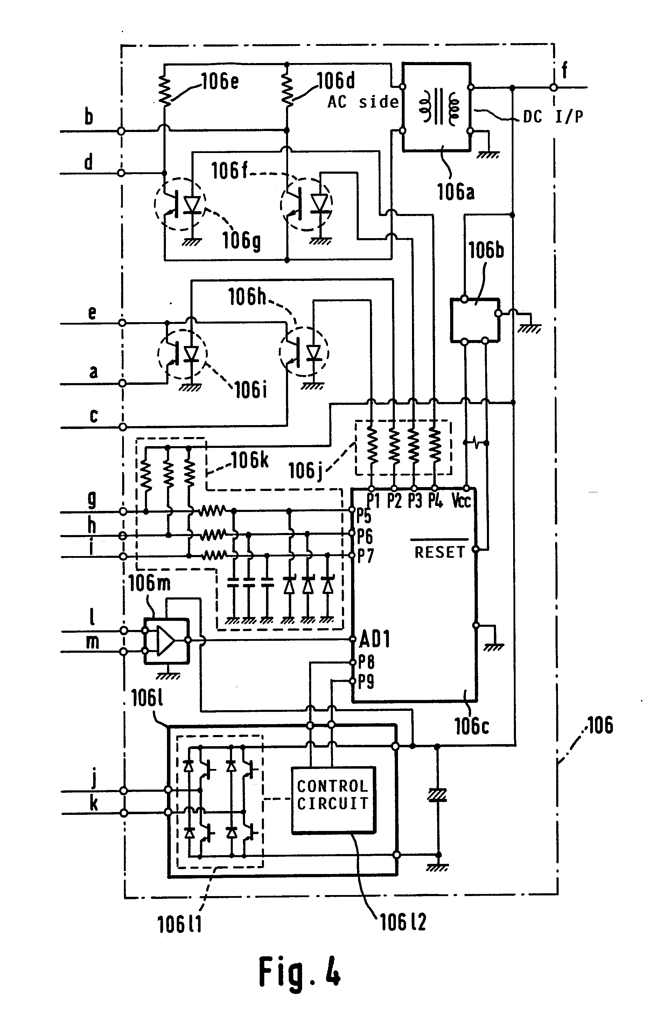

Hereinafter, the detailed circuit construction of the control circuit 106 is explained with reference to Fig.4 - Fig.17.

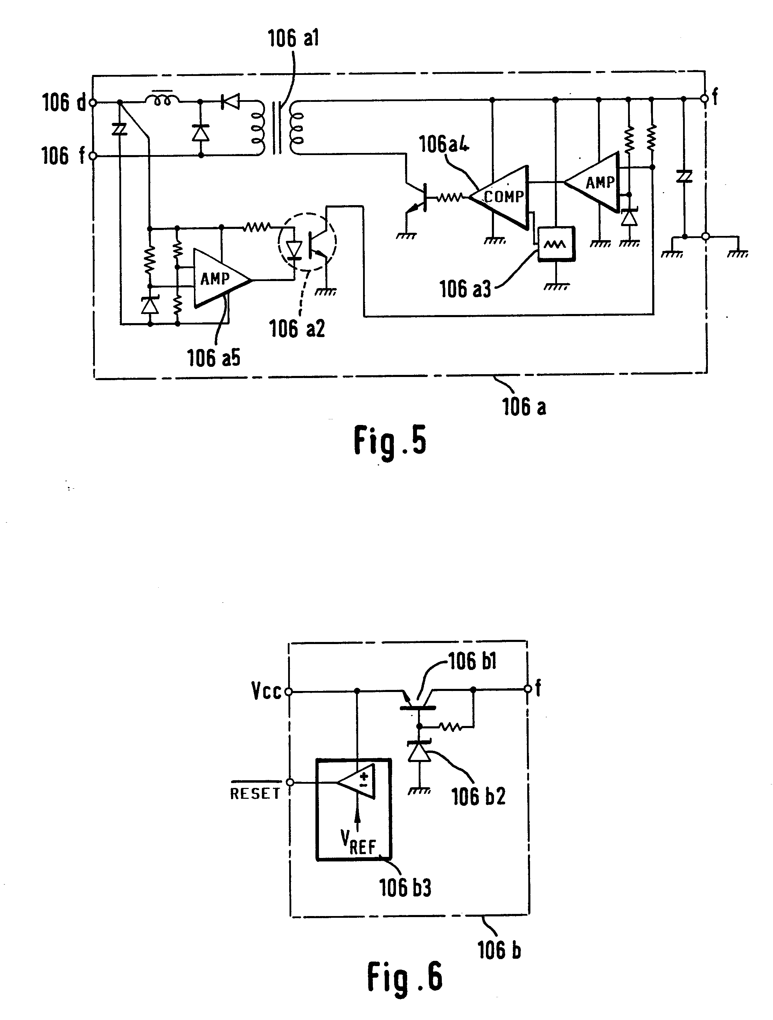

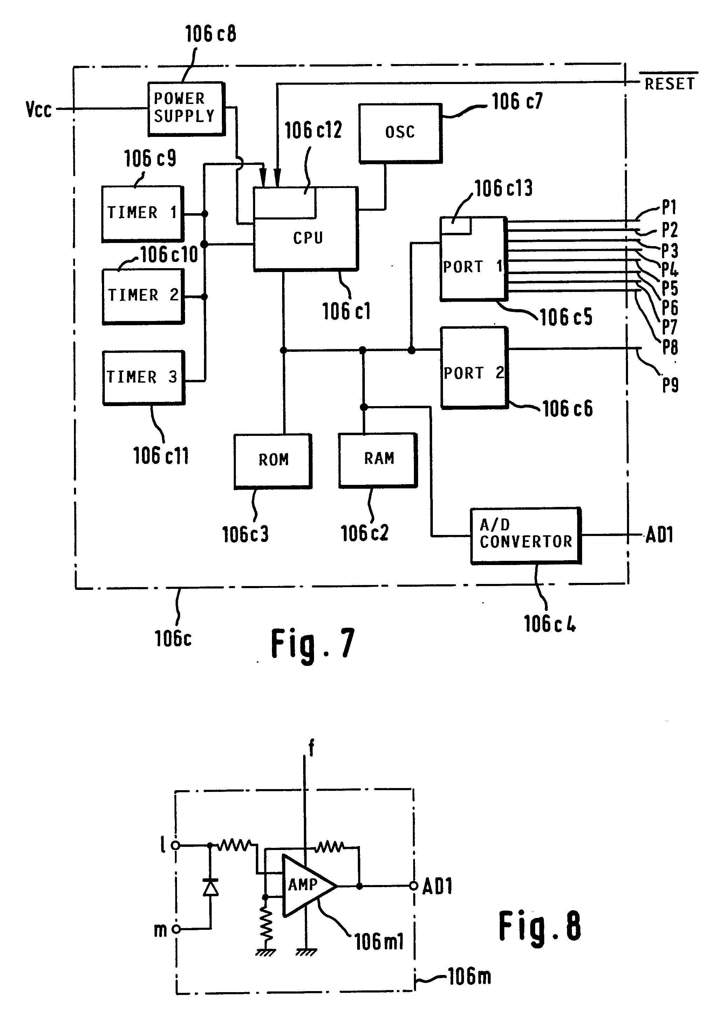

Fig. 4 is a connection diagram of the control circuit 106. The control circuit, in summary, is composed of a DC-DC converter 106a (described in fig.5), an integrated circuit 106b (described in Fig.6), a single chip microcomputer 106c such as Hitachi HD6805W, resistors 106d and 106e, photocouplers 106f - 106i, a group of resistors 106j, an input circuit 106k, a motor driving intergrated circuit 106l and an amplifier 106m.

The DC-DC converter 106a uses the battery as its source and supplies an electric power isolated from the battery to the driving circuit for the transistors 105b and 105d composed of the resistors 106d and 106e and the photocouplers 106f and 106g. The inside of the DC-DC converter 106a has a connection structure as shown in Fig.5. That is, the DC-DC converter 106a is composed of a transformer 106a1, a photocoupler 106a2, a rectangular wave generator 106a3, a comparator 106a4, an operational amplifier 106a5 and associated conventional circuitry.

The integrated circuit 106b supplies an electric voltage Vcc to the single chip microcomputer (hereinafter called micom in abbreviation) and a reset signal (RESET) for maintaining a low level voltage in a predetermined period during starting of the power supply at ignition switch 4 turn ON, and is formed in an equivalent circuit as shown in Fig.6. That is, the integrated circuit 106b is composed of a voltage source circuit using a n-p-n transistor 106b1 and a reference voltage set by zener diode 106b2 and a reset signal generating circuit 106b3 comprising a comparator receiving input voltage signals from Vcc and a reference source to provide a reset output.

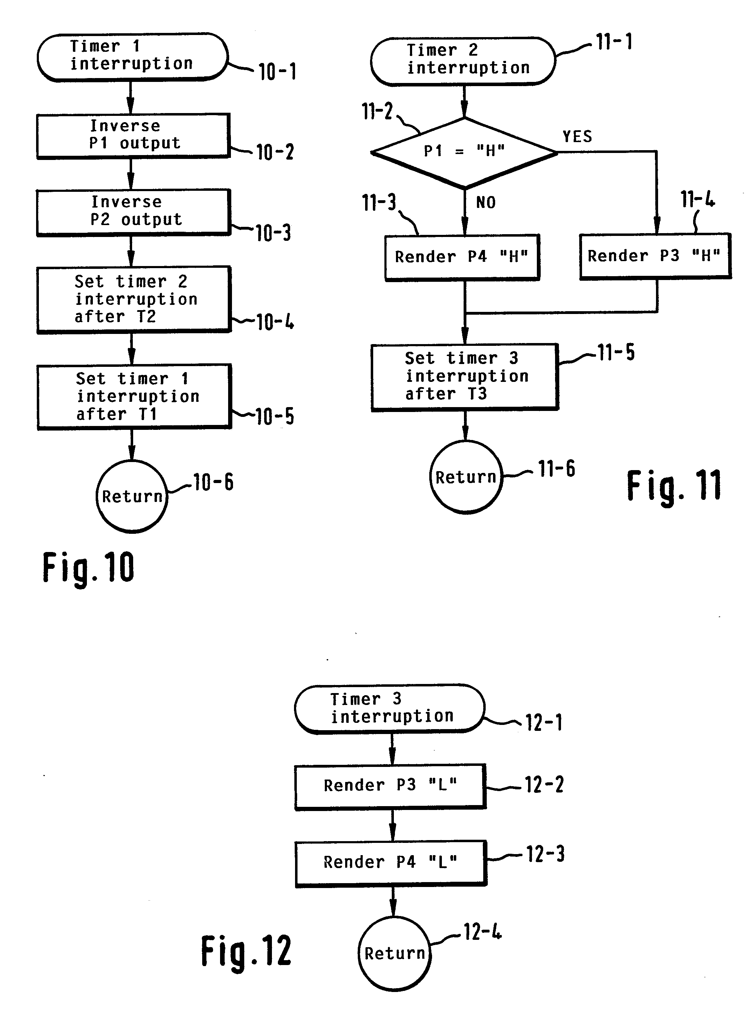

The micom 106c has an internal structure as shown in Fig.7. The micom 106c contains a central processing unit (CPU) 106c1 such as Hitachi HD6805W which incudes memories (RAM, ROM) 106c2 and 106c3, an A/D converter 106c4, input/output ports 106c5 and 106c6, a crystal signal clock oscillator 106c7, a D.C. power source 106c8 and timers 1 -3 106c9 - 106c11, functionally described hereinafter with reference to Fig.10 - 12. The control processing unit (CPU) 106c comprises an interruption detector 106c12 and the input/output port 106c5 comprises a pulse leading edge detector 106c13.

The photocouplers 106h and 106i constitute a driving circuit for driving transistors 105a and 105e.

The input circuit 106k is composed of resistors, capacitors and constant voltage diodes, smooths input signals and protects the input port when inputting into the micom such states such as the handbrake switch 6 condition, the neutral switch 8 and a switch 10 which is rendered ON during vehicle running.

The motor driving integrated circuit 106l is for driving the motor 22 which operates the throttle valve 21, and is constituted by a tansistor bridge circuit 106l1 and a logic control circuit 106l2 such as Toshiba ICTA7267P.

The amplifier 106m amplifies the output of the current transformer 107 and is constructed with the operation amplifier 106m1 and its surrounding elements as shown in Fig.8. The output terminals of the amplifier 106m is connected to the input terminals of the A/D converter 106c4 of the micom 106c.

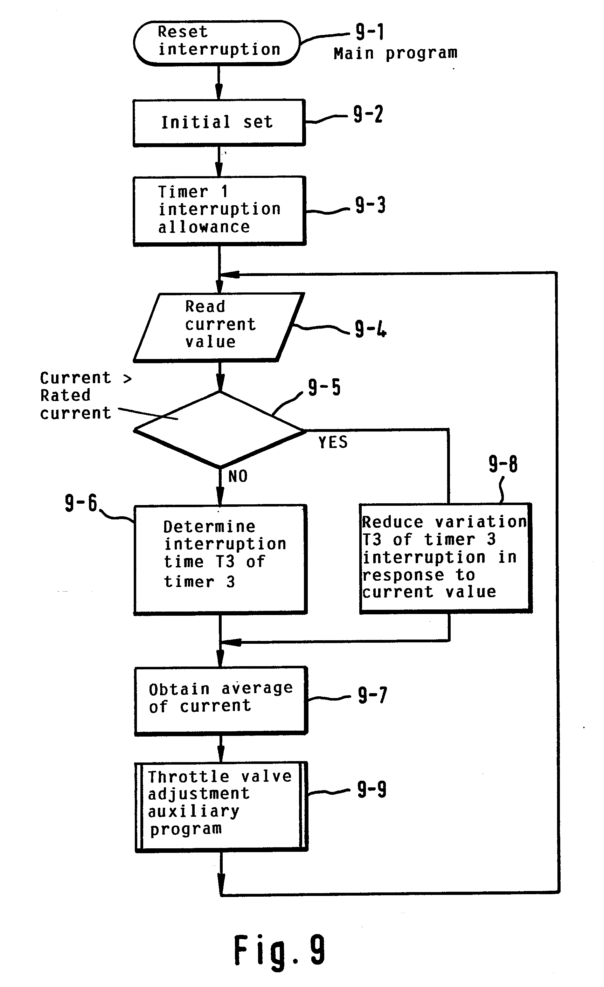

Next, the operation of the control circuit 106 is explained based upon the control flow diagram of the micom 106c shown in Fig.9 -Fig.16.

Fig.9 is a control flow diagram for the start program (a main program) of the control circuit. Initially, at step 9-1 a reset signal, which the integrated circuit 106b outputs when the switch 4 is closed, is generated and the program starts. At the step 9-2, such settings are effected as input and output directions of the input/output ports 106c5 and 106c6 and an output logic level, interruption times of the timers 1-3 (the timers 106c9 - 11) and initial conditions such as clearing memories 106c2 and 106c3 occurs and proceeds to step 9-3. At the step 9-3, the interruption flow of the timer 1 is allowed and thereafter proceeds to the interruption flow of the timer 1 as shown in Fig.10 during the interruption setting time.

In the interruption flow of the timer 1, step 10-1 occurs with the interruption of the timer 1, at step 10-2, the output of the terminal P1 of the input/output port 106c5 inverts and next at step 10-3, the output of the terminal P2 inverts. However when setting the initial conditions at the step 9-2 of Fig.9, one of P1 and P2 is set "H" and the other is set "L". At step 10-4, the interruption time of the timer 2 is set after a time T2; at step 10-5 the interruption time of the timer 1 is set after a time T1 and thereafter at step 10-6, the interruption routine of the timer 1 is reset.

When the interruption of the timer 2 occurs at the step 10-4, the processing of the interruption of the timer 2 is carried out as shown in Fig.11, that is, when an interruption of the timer 2 occurs at step 11-1, at step 11-2 the output logic level of the terminal P1 is determined, and when the output of the terminal P1 is "H", the program proceeds to step 11-4 and renders the output of the terminal P3 of the input/output port 106c5 "H" and when the output of the terminal P1 is "L", the program proceeds to step 11-3 and renders the output of the terminal P4 of the input/output port 106c5 "H". Thereafter the steps 11-3 or 11-4 proceed to step 11-5, the interruption of the timer 3 (the timer 106c11) is set after a time T3 and at step 11-6, the interruption of the timer 2 is reset.

When the interruption of the timer 3 is set at the step 11-5, the program proceeds to step 12-1, an interruption processing routine of the timer 3 as shown in Fig.12, and at step 12-2. the output of the terminal P3 of the input/output port 106c5 is rendered "L" and thereafter at step 12-3, the output of the terminal P4 is rendered "L" and at step 12-4 the interruption of the timer 3 is reset.

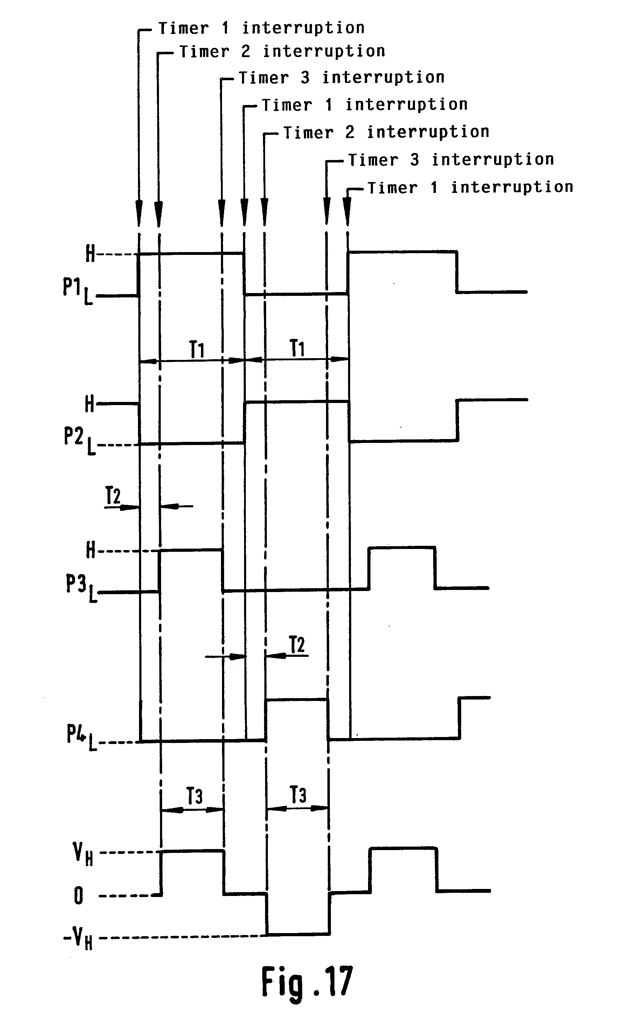

Fig.17 shows a timing chart indicating interruption timing of the timer 1, the timer 2 and the timer 3 shown in fig.10 - Fig.12. The terminals P1, P2, P3 and P4 of the input/output port 106c5 are respectively connected to the photocouplers 106h, 106i, 106f and 106g which drive the transistors 105c, 105a, 105b and 105d in the inverter circuit, and the output wave form of the transistor invertor circuit 105a - 105d is united having a timing of $V_H$, O, $-V_H$ as shown at the bottom of Fig.17, assuming the terminal voltage of the smoothing condenser 104 is $V_H$.

Again returning to Fig.9, the main program is explained. After the interruption of the timer 1 is allowed at the step 9-3, the program proceeds to step 9-4 and the output current of the inverter circuit 105a - 105d is input through the A/D converter 106c4. At step 9-5, determination whether the output current exceeds a rated output current is performed and when such is within the rated output, the program proceeds to a step 9-6 and determines the interruption time T3 of the timer 3 to be a rated time, and when such exceeds the rated output the program proceeds to a step 9-8 and shorten the interruption time T3 of the timer 3, in that, by reducing the interruption time T3 of the timer 3 at the step 9-8, the output conduction rate of the inverter circuits 105a - 105d is limited and the output voltage of the inverter circuit is decreased. Thereby the output current of the inverter circuit is limited not more than the rated current value and the transistors 105a - 105d are protected.

Next, at step 9-7 an average of the output current of the inverter circuits 105a - 105d is obtained and after executing step 9-9 which is an auxiliary program for the throttle valve adjustment, the program again returns to the step 9-4.

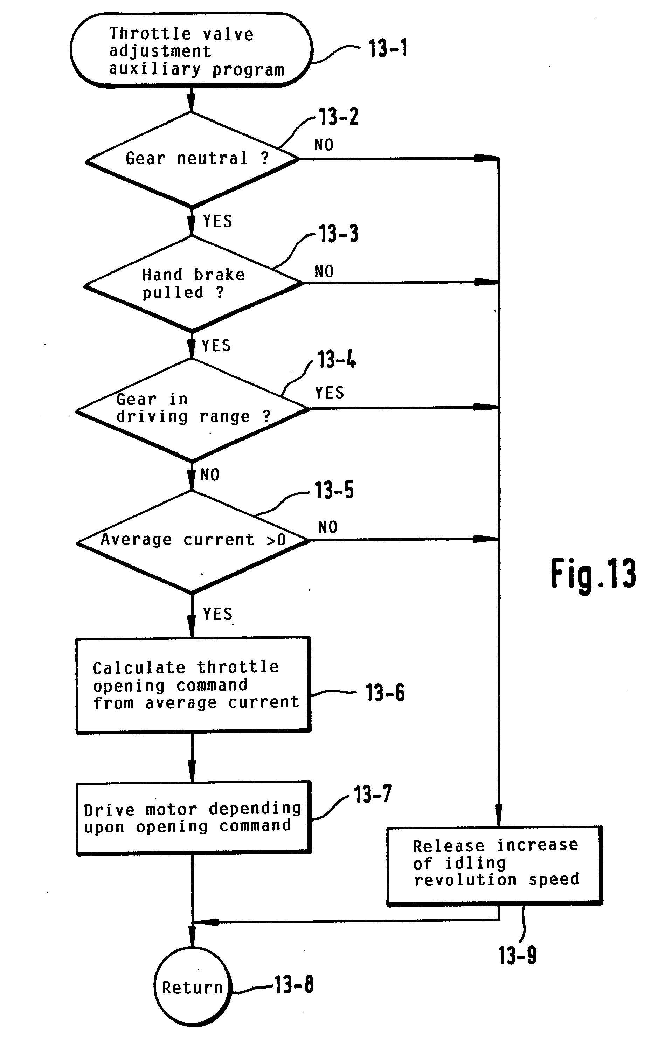

The control flow of the throttle valve adjustment auxiliary program is shown in Fig.13. After entering into the throttle valve adjustment auxiliary program at step 13-1, at step 13-2 the position of the neutral switch 8 is detemined and when the gear is in the neutral position the program proceeds to a step 13-3 and when out of the neutral position, the program proceeds to step 13-9. At a step 13-3, the level of the handbrake switch 6 is determined; when the handbrake is pulled, the program proceeds to step 13-4 and when not pulled the program proceeds to step 13-9. At a step 13-4 the position of the drive switch 10 is determined, when the gear is in the driving range the program proceeds to a step 13-9 and when out of the driving range, the program proceeds to step 13-5.

At step 13-5 when the output current of the inverter circuits 105a - 105d is more than zero, the program proceeds to a step 13-6 and when the output is zero, the program proceeds to step 13-9.

At a step 13-6 an opening command value of the fuel throttle valve 21 is obtained from the current valve by calculation, at step 13-7 the motor 22 is driven in response to the opening command value and at step 13-8 the program returns from the throttle valve adjustment auxiliary program.

On the other hand, in the flow to step 13-9, after the motor 22 is driven for releasing the increase of the idling revolution speed, at step 13-8 the program returns from the auxiliary program.

Specifically, only when the condition of the gear position (the state of neutral and not in a driving gear range) and of the handbrake state (the state when the side brake is pulled ON) is satisfied, the opening angle adjustment of the throttle valve 21 is performed and the idling-up control for increasing the idling revolution speed is carried out; when the condition is not satisfied, the idling-up control is released.

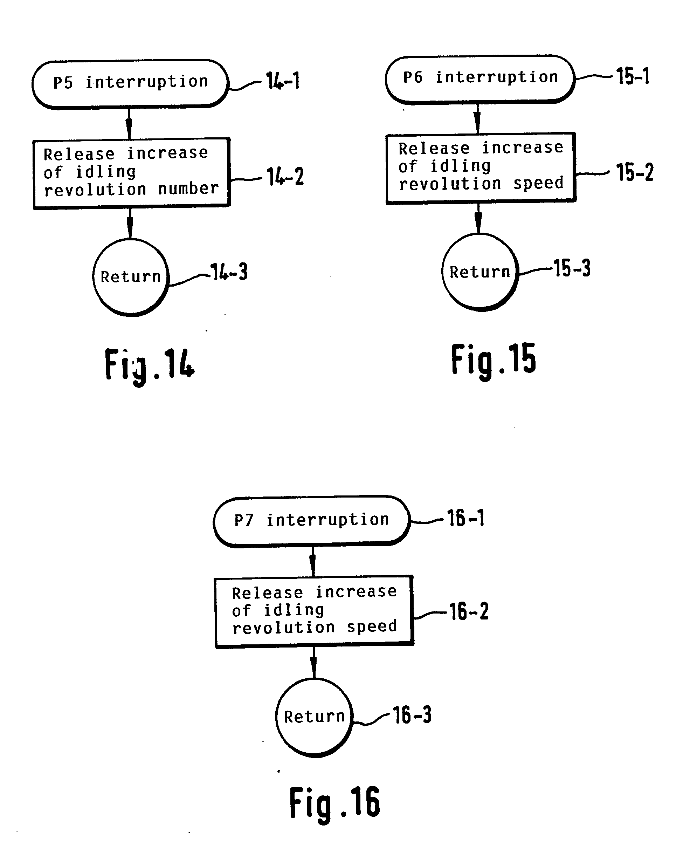

Fig.14 - Fig.16 show control flows of routines which carry out interruption processing in the trailing edge or leading edge of the input signal respectively at the terminal P5 of the input/output port 106c5 connecting the drive switch 10, the terminal P6 connecting the neutral switch 8 and the terminal P7 connecting the handbrake switch. In the interruption processing of the drive switch 10 as shown in Fig.14, the drive switch is rendered ON and the intput signal at P5 is rendered "L". At step 14-1 the interruption occurs in the trailing edge, at step 14-2 the driving signal of the motor 22 for releasing the increase in the idling revolution speed is output and further the throttle valve opening command is initialized and thus at step 14-3 the program returns from the interruption.

Like the step 14-2 of Fig14, the interruption processings at the leading edge ("L"→"H") of the input signals at the input port terminals P6 and P7 of the neutral switch 8 and the handbrake switch 6 respectively release the idling-up control at steps 15-2 and 16-2 as shown in Fig.15 and Fig.16.

By the above interruption processings shown in Fig.14 - Fig.16, when the conditions of the idling-up control is not satisfied, it is possible to instantly release the idling-up control.

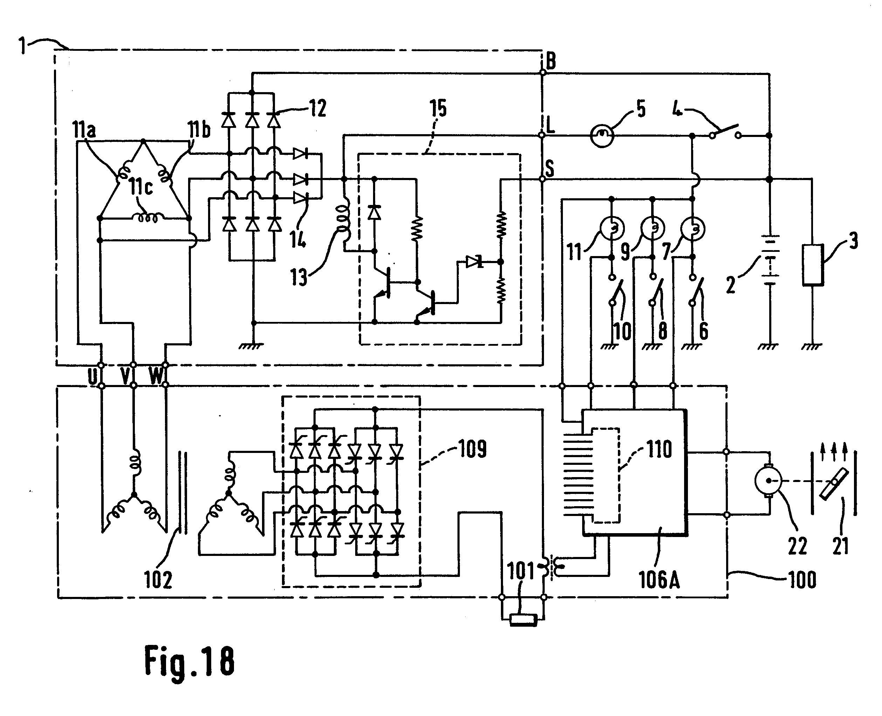

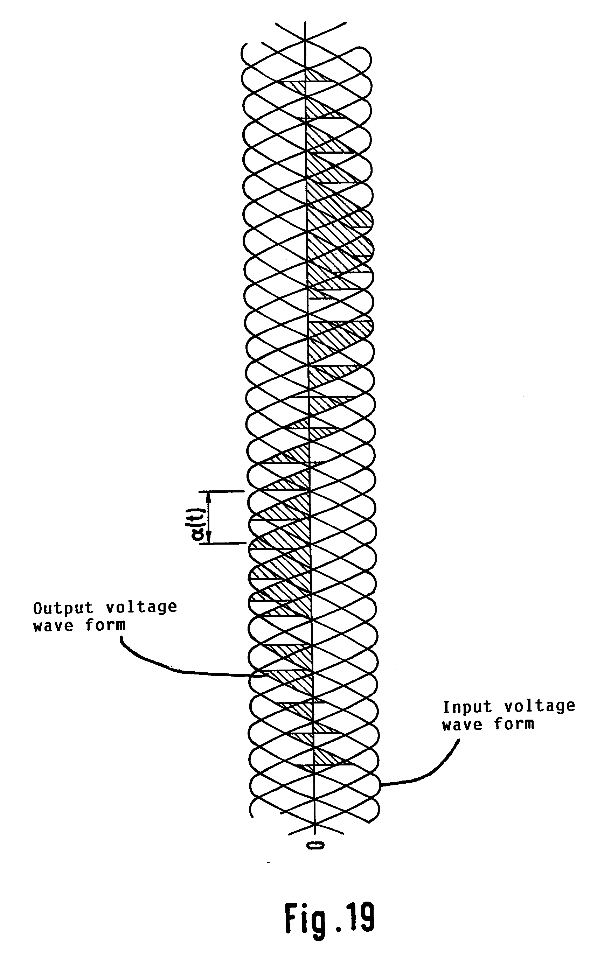

Another embodiment of the present invention is explained with reference to Fig.18 and Fig.19. In Fig.18 like parts to those in Fig.1 have like reference numerals.

In the above explained embodiment, the high voltage alternating current output is boosted by the transformer 102, changed to a high voltage direct current output, and thereafter the commercial frequency alternating current electric power is obtained through the transistor inverter circuit 105a - 105d. In the embodiment of Fig.18 the commecial frequency alternating current electric power is obtained directly from the boosted high voltage alternating current output from the transformer 102. More specifically, in Fig.18 a controller 100A incudes a group of thyristor rectifiers 109 in lieu of the transistor inverter circuits 105a - 105d and the control circuit 106A incudes a phase control circuit 110 for the thyristor rectifying elements 109. It is thus possible to provide an alternating current having a different frequency directly from the high voltage alternating current output from the transformer 102.

In the present embodiment, the control of the thyristor rectifier group 109 is carried out by adjusting phase control angle $\alpha$ (t) based on the following equation.

$$\alpha (t) = \frac{\pi}{2} - \sin^{-1} (\lambda \sin \omega_c t)$$

wherein

$$\lambda = \sqrt{2E_0 / E_1}$$

$E_0$ : Effective value of output voltage
$E_1$ : No load and no control voltage of rectifier
$\omega_c$ : Angular frequency of output alternating current
$t$ : Time

Fig.19 shows the input voltage waveform and the output voltage waveform of the thyristor rectifier group 109 through which the commercial frequency alternating current electric power is obtained by adjusting such phase control angle $\alpha$ (t). In the drawing the portion indicated by cross hatching is the output voltage waveform.

In the embodiment of Fig.18, the device 103 of Fig.1 which inverted the alternating current output of the transformer 102 into a direct current is eliminated and the whole construction is simplified. However since the alternating current output frequency of the alternating current generator 1 varies depending upon changes of the engine revolution speed, the phase control angle $\alpha$ (t) for controlling the thyristor rectifier group 109 also varies so that the construction of the phase angle control circuit 110 becomes somewhat complex.

In the present invention, since the commercial frequency alternating current electric power is obtained from the alternating current output of the alternating current generator through the transformer, a stable commercial frequency alternating current electric power having a small output voltage variation due to the influence of the low voltage direct current load side is provided.

Further, since an insulation type transformer is employed as the alternating current transformer, a generator having constant voltage output may be used as the alternating current generator and since the high voltage side of the generator is insulated by the transformer, the fear of electric shock is practically eliminated and safety is enhanced.

Still further, since the idling-up control of the vehicle is carried out only when the handbrake is pulled ON and the speed change device (gear transmission) is in a neutral state, a large electric power is supplied safely only during stand still. In addition in a running state, since the idling-up control is released, a double failsafe function is attained.

Moreover, the output of the alternating current generator employed in the transformer is comparatively high in its frequency and a reduction of size is possible in comparison with the case wherein the high frequency alternating current output is obtained from the battery.

## Claims

1. A power supply device for supplying both alternating current and direct current power including an alternating current generator (11a-11c) having the output thereof connected to
a) a rectifier (12) for supplying direct current power to a load (3) and
b) an alternating transformer (102) for increasing the alternating current voltage from the alternating current generator,
characterized by said alternating transformer (102) being connected to provide said increased alternating current voltage to an inverter (103-105; 109), whereby said inverter is arranged to provide a high alternating voltage output at a predetermined frequency for an alternating current load (101).

2. A device as claimed in claim 1 wherein the output of the alternating transformer (102) is connected to a rectifier (103) for producing a high voltage direct current output, and the rectifier has the output thereof connected to said inverter (105).

3. A device as claimed in claim 1 or 2 connected to an engine, said engine being arranged to drive said alternating current generator, and wherein there is provided a control means (106) arranged to control the idling speed of said engine at such a level that the alternating current load is satisfied.

4. A vehicle including the device and eingine as claimed in claim 3.

5. A vehicle as claimed in claim 4 wherein said vehicle is provided with a handbrake (6) and the control means (106) is adapted to increase the engine idling speed only when said handbrake is applied (ON).

6. A vehicle as claimed in claim 5 wherein said vehicle is also provided with a gear transmission including a detector means (8, 10) for detecting the state of said transmission and said control means is adapted to increase the engine idling speed only when the handbrake (6) is applied (ON) and the gear transmission detector means determines that the transmission is in a neutral (i.e. non drive) condition.

7. A vehicle as claimed in claim 6 wherein said control means is provided with a protection device (106, Fig.13) adapted to receive signals from the gear transmission detector means and to return the engine speed to a low level speed if the transmission is detected to be in a gear drive condition.

8. A vehicle as claimed in any of claims 4 to 7 inclusive wherein the direct current load (3) includes a vehicle battery charging circuit.

9. A device as claimed in any of claims 1 to 3 inclusive wherein the predetermined frequency is a commercial frequency.

10. A device as claimed in claim 1 wherein the transformer (102) has a primary and a secondary and said transformer is an insulated type in which the primary and secondary are insulated from one another.

Fig. 1

Generator revolution
speed 5000 r/min

Fig. 2 (a)

Generator revolution
speed 5000 r/min

Fig. 2 (b)

Generator revolution
speed 5000 r/min

Fig. 3 (a)

Generator revolution
speed 5000 r/min

Fig. 3 (b)

**Fig. 4**

**Fig.5**

**Fig.6**

**Fig. 7**

**Fig. 8**

Reset
interruption — 9-1
Main program

Initial set — 9-2

Timer 1
interruption
allowance — 9-3

Read
current
value — 9-4

Current >
Rated
current — 9-5

YES

NO

9-6 Determine
interruption
time T3 of
timer 3

9-8 Reduce variation
T3 of timer 3
interruption in
response to
current value

Obtain average
of current — 9-7

Throttle valve
adjustment
auxiliary
program — 9-9

Fig. 9

**Fig.10**

Timer 1 interruption — 10-1

↓

Inverse P1 output — 10-2

↓

Inverse P2 output — 10-3

↓

Set timer 2 interruption after T2 — 10-4

↓

Set timer 1 interruption after T1 — 10-5

↓

Return — 10-6

**Fig. 11**

Timer 2 interruption — 11-1

↓

11-2 — P1 = "H" — YES

NO ↓

11-3 — Render P4 "H"

11-4 — Render P3 "H"

↓

Set timer 3 interruption after T3 — 11-5

↓

Return — 11-6

**Fig.12**

Timer 3 interruption — 12-1

↓

Render P3 "L" — 12-2

↓

Render P4 "L" — 12-3

↓

Return — 12-4

Fig.13

```
┌─────────────────────────┐
│    P5 interruption      │────── 14-1
└─────────────────────────┘
            │
            ▼
┌─────────────────────────┐
│  Release increase       │
│  of idling              │────── 14-2
│  revolution number      │
└─────────────────────────┘
            │
            ▼
        ┌────────┐
        │ Return │────── 14-3
        └────────┘
```

**Fig.14**

```
┌─────────────────────────┐
│    P6 interruption      │────── 15-1
└─────────────────────────┘
            │
            ▼
┌─────────────────────────┐
│  Release increase       │
│  of idling              │────── 15-2
│  revolution speed       │
└─────────────────────────┘
            │
            ▼
        ┌────────┐
        │ Return │────── 15-3
        └────────┘
```

**Fig.15**

```
┌─────────────────────────┐
│    P7 interruption      │────── 16-1
└─────────────────────────┘
            │
            ▼
┌─────────────────────────┐
│  Release increase       │
│  of idling              │────── 16-2
│  revolution speed       │
└─────────────────────────┘
            │
            ▼
        ┌────────┐
        │ Return │────── 16-3
        └────────┘
```

**Fig.16**

Fig.17

Fig.18

EP 0 379 357 A2

Fig.19